## Europäisches Patentamt

## European Patent Office

## Office européen des brevets

(11) Publication number: **0 169 945**
**B1**

(12) **EUROPEAN PATENT SPECIFICATION**

(45) Date of publication of patent specification: 26.04.89

(51) Int. Cl.⁴: **A 01 D 45/02**

(21) Application number: 84201102.5

(22) Date of filing: 27.07.84

(54) Row crop gathering attachment for forage harvester.

(43) Date of publication of application:
05.02.86 Bulletin 86/06

(45) Publication of the grant of the patent:
26.04.89 Bulletin 89/17

(84) Designated Contracting States:
DE FR IT

(56) References cited:
FR-A-2 361 054
GB-A-1 124 089
GB-A-2 048 039
GB-A-2 072 049
US-A-3 623 298

(73) Proprietor: FORD NEW HOLLAND N.V.
Leon Claeysstraat 3a
B-8210 Zedelgem (BE)

(72) Inventor: Decoene, Frans J.G.C.
Ruddervoordestraat 19
B-8210 Zedelgem (BE)
Inventor: van Groenigen, Jan C.
Schoolstraat, 24
B-8202 Varsenare (BE)

(74) Representative: Vandenbroucke, Alberic T.J.
et al
Ford New Holland NV. Patent Department Leon
Claeysstraat, 3A
B-8210 Zedelgem (BE)

## Description

The present invention relates generally to a forage harvester and in particular to the components that are adapted to gather row crops, sever these crops from the stubble and feed the same to a cutter mechanism. Such components together form the row crop gathering attachment or row crop header.

A typical forage harvester operating in row planted stalk crops such as maize (USA: corn) or the like, includes a mobile base unit and a row crop header for gathering the crop from the field. The base unit includes a forward, generally rectangular inlet opening, a feed roll assembly spanning the width of the inlet opening and a cutter mechanism for cutting or chopping the stalks into small pieces. The row crop header has a rear outlet for communication with the inlet opening when the header is mounted on the front of the base unit. As is well known, the crop is gathered by the header and delivered rearwardly into the feedroll assembly that feeds the crop to the cutterhead.

It is known to provide a row crop header or row crop gathering attachment with a pair of spaced apart members, which are known as dividers, and which pass on either side of standing maize as the harvester travels forwardly. A forward set of crop conveyor means in the form of gathering chains, one on each divider, operates to grip the standing crop and convey it rearwardly. These conveyor means are provided at a relatively substantial height above the ground level. After the crop is gripped by the forward gathering chains and before it is released, the crop is severed from its stubble by cutter means and a rearward set of gathering chains catchhold of the crop and cooperate with the forward set to deliver the crop at a proper angle into the feedroll assembly and chopping mechanism. Usually, the crop is fed into the feedroll assembly and chopping mechanism butt ends first. The rearward set of gathering chains extends generally parallel to the forward set. Also the rearward set of gathering chains and the cutter means for severing the crop from the stubble are situated much closer to the ground than the forward set of gathering chains, when the attachment is in its operative position.

Usually, the stalkway defined between the adjacent dividers is closed at its lower end by a transverse floor which extends rearwardly of the cutter means for severing the stalks from the stubble and generally at the same level. Said floor further also is provided at a short distance below the rear gathering chains.

The row crop attachment may be adapted to harvest one, two three, four or even more rows of crop at a time. In the row crop headers with fewer row units, the forward and rearward conveyor means are operable to feed gathered crop directly into the feed roll assembly. In row crop headers with three, four or more row units, a transverse consolidating auger is generally required to laterally convey the crop to the narrow central discharge outlet of the attachment communicating with the inlet on the base unit.

Row crop gathering attachments of the type just described are shown in GB.997.485 and US.4.083.167. The former shows a single row attachment while that the latter, which issued much later, is concerned with a four row header.

While that the forward gathering chains usually have an acceptable lifetime, the same cannot be said about the rearward gathering chains known from the prior art. Indeed, it has been a long felt problem that the rearward gathering chains suffer from excessive wear which is due to a plurality of reasons.

One of the reasons for the excessive wear of the rearward conveyor chains is to be found in the fact that, because the chains are situated fairly close to the ground during operation, said chains often are operating in a humid and dirty environment. Soil and mud gets in the links of the conveyor chains, whereby the chain components are subjected to an abrasive action. Said environment often is humid a.o. because of the green undergrowth and of plant juices. The environment often is dirty because of the same humidity in combination with weed, plant debris and soil.

Furthermore, the trough formed by the floor and the side walls of the stalkway, under certain adverse conditions, may get filled up with mud, debris, portions of maize plants, etc. up to the level of the rearward crop conveyor chains, whereby said chains may be subjected to transverse forces urging said chains to deviate from their normal parths in the planes through the associated sprockets. Apart from the increased load and the increased wear resulting therefrom, this also results in a less efficient conveying of the crop through the stalkway, as the grip of the rearward conveyor chains on the lower ends of the crop stalks is reduced thereby. This may result in plugging of the header in certain adverse crop conditions.

Also, weedy undergrowth and portions of the crop may wrap around the sprockets and shafts carrying and driving the conveyor chains and add to the wear and plugging problems.

GB-A-1.124.089 shows another row crop gathering attachment which is different from the attachments of GB-A-997.485 and US-A-4.083.167 only in as much as it comprises only one pair of crop conveyor means per stalkway. Apart therefrom the attachment of GB-A-1.124.089 also comprises the stationary floor plates rearwardly of the cutter means and which give rise to the above described problems.

It is therefore the object of the present invention to provide a row crop gathering attachment for a forage harvester which is more efficient in operation under adverse conditions and which is less subject to wear, whereby an increased lifetime is obtained.

According to the invention, a row crop gathering attachment for a forage harvester is provided which comprises at least one elongated stalkway delimited, on the one hand, at transversely opposite sides thereof by generally upright and generally fore-and-aft extending wall portions of a pair of crop dividers and, on the other hand, at a rearward and lower side thereof by floor means extending transversely between said opposite wall members and across the width of said stalkway; each said stalkway further also having associated therewith:

— first crop conveyor means extending transversely into said stalkway at positions generally above the level of the floor means; said first conveyor means, in use, moving backwards for gathering standing crop and for conveying the same in a rearward direction through the stalkway as the forage harvester travels forwardly; and

— cutting means provided at a level below the first crop conveyor means on the one hand and forwardly of and generally in alignment with the floor means on the other hand; said cutting means being operable to sever crop from the stubble after being engaged by the first crop conveyor means.

The invention is characterized in that the floor means are formed by second crop conveyor means including at least one rotary member in the form of shaft means on which are mounted a plurality of crop conveying elements extending therefrom and relatively closely spaced axially thereof; said shaft means extending generally horizontally transversely across the width of the stalkway and the or each rotary member, in use, being rotated so as to constitute, in effect, a moving floor operable to engage the butt ends of the crop severed by the cutting means and to transfer the same thereover and longitudinally of the stalkway.

According to a preferred embodiment of the invention, the second crop conveyor means of the or each stalkway comprise a plurality of rotary members, each in the form of shaft means on which are mounted a plurality of crop conveying elements extending therefrom and relatively closely spaced axially thereof; said shaft means extending transversely across the width of said stalkway and being positioned the one generally behind the other as seen in the longitudinal direction of said stalkway and being spaced relative to each other so that the crop conveying elements of adjacent rotary members interleave, and said rotary members, in use, being rotated in the same direction so that they, in effect, constitude said moving floor.

Preferably the crop conveying elements extending from the shaft means are in the form of toothed discs mounted perpendicularly to the respective shaft means. The plurality of rotary members according to the preferred embodiment of the invention is driven in timed relationship so that the crop conveying elements of any one rotary member have a combing effect on the crop conveying elements of the next preceding rotary member for ensuring a smooth and positive transfer of the crop material from one rotary member to the next rotary member.

The toothed discs forming the aforementioned crop conveying elements have operative edges which, as seen in the direction of rotation of the rotary members, lead with respect to the straight lines drawn between the centers of the discs and the outer ends of the teeth, and which define angles of inclination with said straight lines. The angle of inclination of the operative edge of a crop conveying element of one rotary member is larger than the angle of inclination of the operative edge of a crop conveying element of another rotary member positioned forwardly of said one rotary member. Thereby any one rotary member, in operation, has a more aggressive grip on the crop material than the next following member, with the least aggressive rotary member being positioned furthest to the rear.

In a preferred embodiment, the second crop conveyor means are formed by three parallel and transverse rotary members. The angles of inclination of the operative edges of the crop conveying elements of the forward, middle and rearward rotary members are in the range of 15°, 30° and 45° respectively. The toothed discs forming the crop conveying elements may have a thickness and a diameter in the range of respectively 1-2 mm and 15cm. Said components may be axially spaced apart over a distance in the range of 1-2 cm.

The moving floor, in effect, formed by the at least one rotary member is disposed with its operative surface in crop receiving relationship to the cutter means and rearwardly thereof. Said operative surface extends upwardly and rearwardly relative to the direction of operative travel of the harvester.

The operative edges of the crop conveying elements of the rotary member adjacent the cutter means generally are aligned with the cutter means at the moment said edges take over the crop material from the cutter means.

According to an important aspect of the invention, all movable functional components in the lower portion of the or each stalkway are of the rotary type and have bearing means which are positioned fully outside said stalkway i.e. within the sheet metal structures of the crop dividers defining said stalkway therebetween. Furthermore the or each stalkway is exempt of any stationary floor components.

A forage harvester in accordance with the present invention will now be described in greater detail by way of example, with reference to the accompanying drawings, in which:

Figure 1 is a schematic side elevational view of a multirow crop header embodying the present invention with portions of the header being broken away to more clearly show the operational components thereof.

Figure 2 is an enlarged fragmentary top view taken in the direction of arrow II in Figure 1 showing one row unit with a.o. a portion of the upper (forward) crop conveyor means, the lower (rearward) crop conveyor means and the stalk cutting means of a row unit.

Figure 3 is a sectional view taken along the lines III-III of figure 2.

Figures 4 and 5 are diagrammatical views showing the successive relative positions of the various components of the lower (rearward) crop conveyor means according to the invention.

In the following description, right hand and left hand references are determined by standing at the rear of the machine and facing in a direction of forward travel. Also, in the following description, it is to be understood that such terms as "forward", "rearward", "left", "right", "upwardly", etc. are words of convenience and are not to be construed as limiting terms.

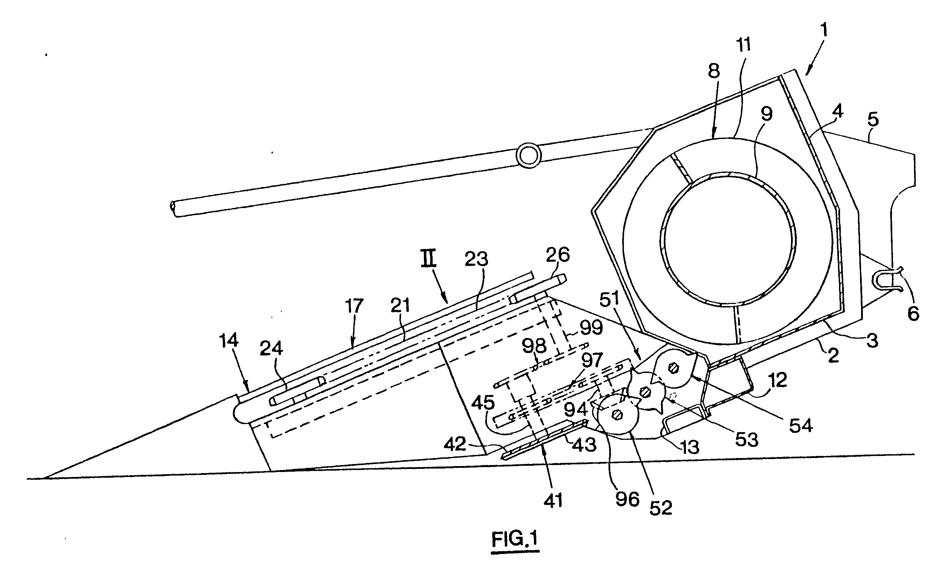

Referring now to the drawings, and particularly to Figure 1, there is shown a multi-row crop header or gathering attachment, being indicated generally by the number 1, incorporating the principles of the present invention and being adapted to be mounted on the front of a harvesting unit, such as a pull-type or self-propelled forage harvester (not shown) for gathering row crops, such as maize or the like, as the unit advances over a field of row planted stalk crops. The invention is not specifically limited to a multi-row header model, as shown in Figure 1, but is equally applicable to a single row model.

As seen in Figure 1, the header 1 includes a frame 2 having a.o. a bottom wall 3 and a rear wall 4 with a central discharge outlet (not shown) defined therein. On opposite sides of the discharge outlet is a pair of throat plates 5, each projecting outwardly and rearwardly from the rear wall 4. The rear wall 4 also supports a pair of conventional mounting brackets 6 for attaching the header 1 to the front of the harvesting unit.

Transversely extending on the frame 2 and rotatably mounted thereon is an auger 8 having an auger cylinder 9 and left and right hand flights 11. The respective flights 11 are spirally wrapped in opposite directions around the auger cylinder 9 inwardly from the respective ends thereof toward the center section so as to laterally convey crop material along the auger and consolidate the same at the central section of the auger. Supported on the central section of the auger cylinder 9 is an array of spaced apart projecting fingers (not shown) that direct the consolidated material rearwardly through the central discharge outlet.

Disposed adjacent a transverse beam 12 of the frame 2, at the front edge of the bottom wall 3, is a transversely extending tubular frame member 13 supporting a plurality of spaced apart fore-and-aft extending members, known as crop dividers 14. The dividers 14 are of sheet metal structure fabricated on subframe structures (not shown) and are generally triangular in configuration when viewed in plan. The crop dividers of each pair of adjacent and cooperating crop dividers 14 are widely spaced apart at their forward ends and converge as they extend rearwardly to a point where they extend parallel to each other to provide a generally fore-and-aft extending inlet or passage 16. The passage 16 is thus part of a larger elongate generally upright and generally fore-and-aft extending stalkway 15 defined between each pair of opposed crop dividers 14 together forming what is known in the art as a row unit 17. Each stalkway 15 has a wide open inlet facing in a forward direction for receiving a respective row of stalk crops as the harvester advances over a field with row planted crops.

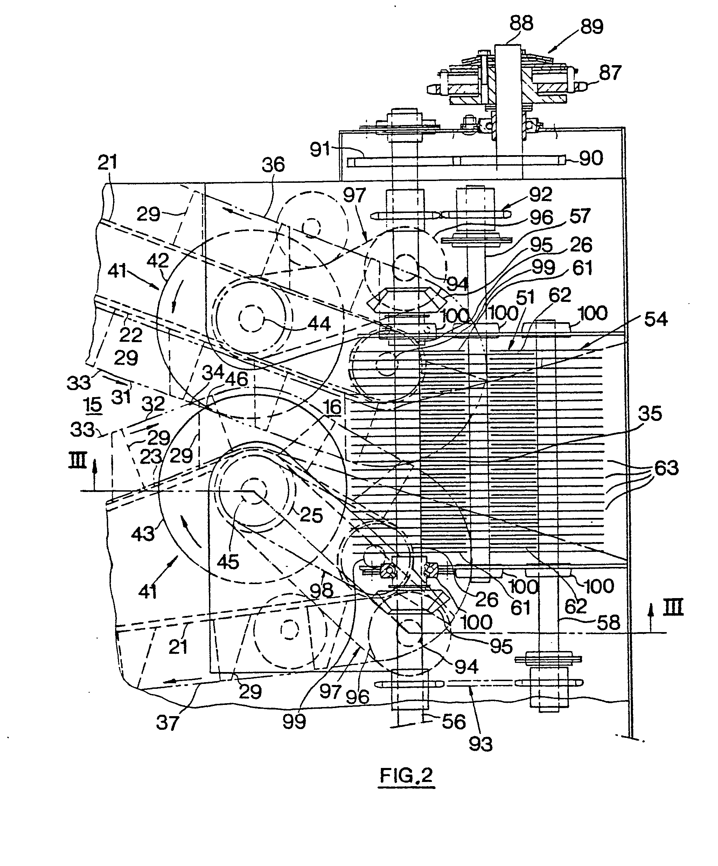

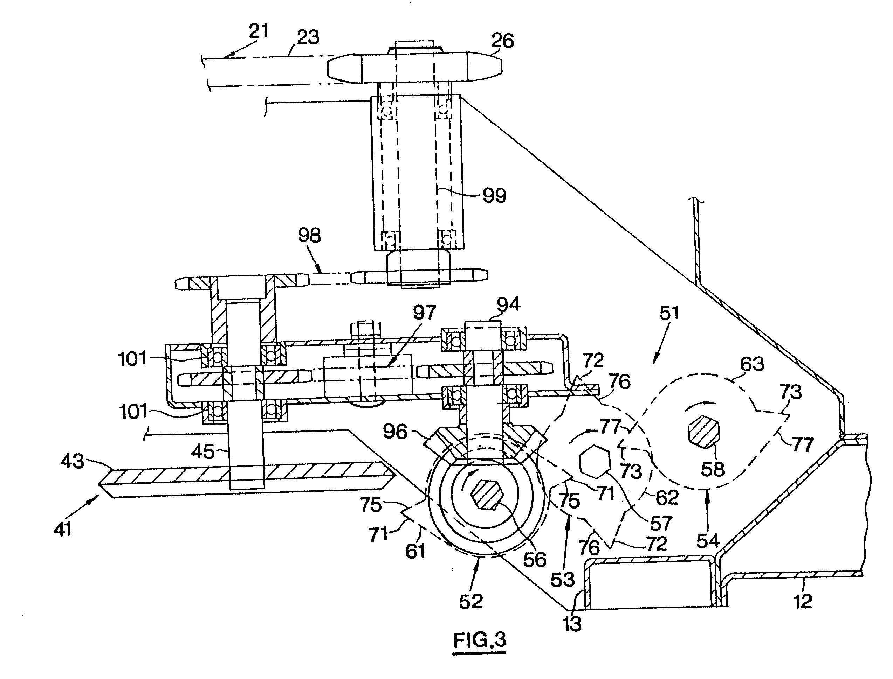

To provide for proper infeed of the crop, a first crop conveyor means or gathering means 21 is provided on each row unit 17. The first gathering means 21 comprises a pair of cooperating gathering elements or chains 22 and 23; one chain 22 being operative in one divider 14 of each pair of dividers and the other chain 23 being operative in the other divider 14 of each pair of dividers. Each chain 22, 23 passes over a forward sprocket 24, Figure 1 and a rearward sprocket 26, Figures 1, 2 and 3. In addition thereto chain 23 also passes over intermediate sprocket 25 which is positioned offset with respect to the straight line between the centers of the forward and rearward sprockets 24, respectively 26. The chains 22, 23 have outwardly extending gathering fingers 29 which are projectable through suitable slots in the dividers 14. The chains 22, 23 have infeed reaches 31 and 32, respectively, which converge rearwardly and with the paths 33 of the fingers 29 crossing at a grip point 34, Figure 2. The fingers 29 overlap for a short fore-and-aft distance, with the overlap leaving at a release point 35. The fingers 29 on the chains 22, 23 are so arranged that they successively pass across the overlapping section. A finger 29 on chain 22 passes the section and then a finger 29 on the chain 23, and so on. After the infeed reaches 31, 32 of the gathering chains 22, 23 diverge at the release point 35, they travel along the return reaches 36 and 37 respectively and back to the starting position at the forward sprockets 24.

As shown in Figure 1, the first crop conveyor means 21 (upper, forward gathering means) extend upwardly and rearwardly relative to the direction of travel of the harvester.

Disposed within the rear portion of each stalkway 15 is a severing or cutter means 41 in the form of two rotary cutter discs 42, 43 which project into the stalkway 15 and are disposed in overlapping relationship and operate to sever the crop from its stubble. The discs 42, 43 are respectively supported on the lower ends of upright shafts 44, 45 which themselves are supported via suitable bearings on the divider subframe structures.

As is shown in figure 1, the cutter means 41 are positioned fairly close to the ground when the attachment 1 is in the operative position. This is at a relatively substantial distance below the first (upper or forward) crop conveyor means 21. It further also can be derived from Figures 1 and 2 that, when seen in a direction perpendicular to the plane of the conveyor chains 22, 23 (indicated by arrow II in Figure 1), the cutterblades 42, 43 have their cutting zone, i.e. the point 46 where the cutterblades overlap each other, generally below the grip point 34 of the associated conveyor chains 22, 23. Also, the plane defined by the cutter discs extends upwardly and rearwardly relative to the direction of travel of the harvester.

The attachment 1 further also comprises on each row unit second gathering means or crop conveyor means 51 located on the frame 2 rearwardly of and below the first crop gathering means 21. Said second gathering means are positioned rearwardly of the cutter means 41 and, in effect, form a bottom wall of the associated stalkway 15 in the rearward portion thereof.

The second crop conveyor means 51 comprise a plurality of rotary members 52, 53, 54 which numbers three in the illustrated embodiment and extend transversely of each row unit through the stalkway 15 thereof and generally at the lower end thereof. The rotary members 52, 53, 54, extend parallel to each other and the one behind the other. The axes of all three rotary members lie substantially in a common plane which is inclined upwardly and rearwardly with respect to the direction of travel of the harvester. Said common plane is inclined at a slightly steeper inclination than the cutter discs 42, 43 and extends rearwardly from a location just beneath and rearwardly of said cutter discs 42, 43. The rear rotary member 54 is positioned in the vicinity of the lower portion of the auger 8 and parallel thereto. The rearward extension of the plane defined by the axes of the rotary members 52, 53, 54 is oriented generally tangentially relative to the underside of the auger cylinder 9.

Each rotary member 52, 53, 54 comprises a shaft means 56, 57, 58 respectively on which are mounted a plurality of crop conveying elements 61, 62, 63 extending therefrom and which are relatively closely spaced axially of the shaft means. The crop conveying elements 61, 62, 63 are in the form of toothed discs of reduced thickness and which extend generally perpendicularly on the associated shaft means 56, 57, 58. The discs have a thickness in the range of 1-2 mm and an overall diameter in the range of 15cm and are axially spaced apart over a distance in the range of 1-2 cm.

The shaft means 56, 57, 58 are spaced relative to each other and positioned so that the crop conveying elements 61, 62, 63 of adjacent rotary members 52, 53, 54 interleave. The very close spacing of the interleaving crop conveying discs gives rise to a substantially continuous floor over which cut crop passes to the auger 8.

While that the crop conveying elements 61, 62, 63 on each individual shaft means 56, 57, 58 are identical to each other, it is to be noted that the crop conveying elements 61, 62, 63 on one shaft means 56, 57, 58 differ from the crop conveying elements on the other shaft means.

All crop conveying elements 61, 62, 63 in the illustrated embodiment have a pair of diametrically opposed teeth 71, 72, 73. These teeth have a height in the range of 2,5 cm and extend from the circumference of circular body portions with a diameter in the range of 10 cm. Each tooth 71, 72, 73 has an operative edge 75, 76, 77 which, as seen in the direction of rotation, leads with respect to the straight line drawn between the center of the associated disc and the tip of the tooth. The angle of inclination 82, 83, 84 between this operative edge 75, 76, 77 and said straight line is different on the crop conveying elements 61, 62, 63 of different rotary members 52, 53, 54. The forward rotary member 52 has the smaller angles 82 and the rearward rotary member 54 has the larger angles 84, while that the intermediate rotary member 53 has angles 83 situated inbetween both extremes. In the illustrated embodiment, the angles 82, 83 and 84 are in the range of 15°, 30° and 45° respectively.

The forward rotary member 52 should have a positive grip on the butt ends of the crop stalks for positively taking over the same from the cutter means 41 and for positively transferring the stalks to the next rotary member 53. Accordingly, the angle 82 defined herebefore should be small, thus providing an aggressive operative edge 75. Also, the forward rotary member 52 is positioned relative to the cutter discs 42, 43 for smoothly taking over the crop material severed and transferred rearwardly by said discs. Accordingly the forward rotary member 52 is located closely behind the cutter discs 42, 43 and at a level such that, the operative edges 75 of the crop conveying elements 61 generally are aligned with the cutting discs 42, 43 at the moment said edges 75 take over the crop from the cutter discs. Hence, the shaft means 56 of the forward rotary member 52 are positioned just slightly below the cutting plane defined by the cutter discs 42, 43.

The rearward rotary member 54 still should have a positive conveying effect on the butt ends of the crop material. However, at the same time, the crop conveying elements 63 of the rearward rotary member 54 should not be too aggressive as the operative edges 77 should release the crop smoothly in the vicinity of the auger 8 thus avoiding material from being urged past the auger and underneath said rotary member whereby wrapping around the rotary member would occur. Accordingly, the operative edges 77 are provided at a much less aggressive angle 84, when compared with the angle of inclination 82 of the crop conveying elements 61 of the forward rotary member 52. In other words the angle 84 is much larger than the angle 82 (45° in the illustrated embodiment).

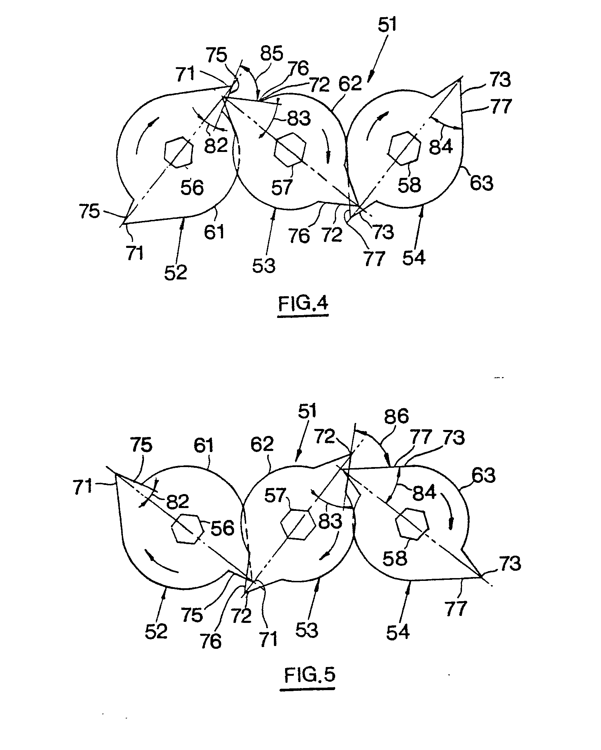

The shaft members 56, 57, 58 are rotated in timed relationship so that the teeth of the second and third rotary members 53, 54 have a combing effect on the teeth of the next preceding rotary members 52, 53 respectively as is illustrated in Figures 4 and 5, thereby insuring a smooth and positive transfer of the crop material from one rotary member to the next rotary member.

It is further also an important aspect of the invention that the angles 85, 86 defined between the operative edges 75, 76 respectively 76, 77 of the teeth 71, 72, 73 of the respective adjacent rotary members 52, 53, 54 at the moment the teeth of one rotary member take over the crop material from the teeth of the next preceding rotary member in the combing manner described herebefore, do not become too small, as otherwise said cooperating teeth would pinch the crop material whereby plugging would result therefrom. Ideally these combing angles should be in the range of 90°.

However, the specific requirements applicable to the front and rear rotary members 52 and 54 and as described herebefore are conflicting in this respect. In other words, if the front and rear rotary members 52 and 54 were positioned so that the respective crop conveying elements 61 and 63 thereof would interleave in the manner as described, then the combing angle between the respective operative edges 75 and 77 would be substantially less than 90°.

Consequently, an intermediate rotary member 53 is provided between the front and rear rotary members 52 and 54 and which has toothed crop conveying elements 62 with operative edges 76 of "medium" aggressiveness as the angle 83 is in the range of 30°. As illustrated in Figures 4 and 5, the combing angles 85 and 86 thereby have been brought in the range of 75°, which is still sufficiently large to avoid shearing or pinching action on the crop material.

According to another important aspect of the invention, all functional components, such as conveyor means and cutter means, which are provided in the lower portion of the attachment, i.e., for operation in the aforementioned humid and dirty environment, are exclusively of the rotary type. This has enabled to reduce wearing of components substantially as, first of all, all vulnerable and fast wearing components, such as conveyor chains, have been removed and secondly, as all movable components can be mounted on the respective subframes via suitably sealed bearings such as the bearings 100 supporting the shaft means 56, 57 and 58 and the bearings 101 rotatably supporting the cutter shafts 44, 45. Furthermore these bearings 100 and 101 are provided fully within the divider sheet metal structures whereby these components do not suffer too much from the dirty environment already mentioned; said environment being located mainly within the stalkways at the lower positions thereof. This is in sharp contrast with the known chain type conveyors of which the links often are subjected to an intense abrasive action by dirt that gets therein as a result of the fact that, unlike said bearings, said links necessarily operate in said humid and dirty environment. Accordingly the wear problems described in the introduction of the present application have been reduced quite dramatically with the present invention.

The drive to the various components of the row crop attachment is taken from the base unit via a chain-and-sprocket transmission of which only the sprocket 87 on the intermediate shaft 88 on the attachment is shown. The sprocket 87 is combined in the conventional manner with a safety slip clutch 89. The drive is taken further from the intermediate shaft 88 to the front shaft means 56 of the forward rotary member 52 via a pair of meshing gears 90, 91. The further shaft means 57 and 58 are driven in the same direction and at the same speed as the shaft means 56. Therefore chain-and-sprocket transmissions 92 and 93 extend between the shaft means 56 on the one hand and the shaft means 57, respectively 58 on the other hand. The drive direction of the shaft means 56, 57 and 58 is such as to convey crop material overtop.

Drive is further also taken from the shaft means 56 to the cutter means 41 via intermediate shafts 94. Conical gears 95-96 transfer motive power from the shaft means 56 to said intermediate shafts 94 and a chain-and-sprocket transmission 97 between each intermediate shaft 94 and the associated cutter disc 42, respectively 43 completes the power transmission line to the cutter means 41. The cutter discs of each pair of cutter discs are rotated in opposite directions and so as to provide a shearing action at the cutting point 46 and to transfer cut stalks rearwardly and upwardly over the top surface of said discs.

Motive power is further also transferred from each individual cutter shaft 44, 45 to the associated first crop conveyor means 21 via a further chain-and-sprocket transmission 98 extending between said cutter shaft 44, 45 and the shaft 99 carrying the rear sprocket 26 of the respective crop conveyor means 21. The opposing conveyor chains 22-23 of each row unit 17 are driven in opposite directions and such as to gather crop stalks and to convey the same rearwardly through the associated stalkway 15.

Preferably the infeed reaches 31, 32 of the gathering chains 22, 23 must travel at a linear speed at least as fast as, but not substantially faster than the fastest ground speed of the harvester. Also, preferably the circumferential speed of the crop conveying elements 61, 62, 63 of the second gathering means 51 slightly exceeds the linear speed of the first gathering means 21.

It should be remarked that all drive transmission components, and in particular the drive chains are provided inside the divider sheet metal structures and thus are fully shielded against the adverse effects of the humid and dirty environment already mentioned.

In operation, the harvester is moved forwardly across a field with row planted stalk crops. The gathering chains 22, 23 of the first (upper or forward) crop conveyor means 21 bunch the crop and first positively confine it at the grip points 34 where the fingers 29 first overlap. The crop is then positively conveyed rearwardly by the conveyor chains 22, 23 across the passage inlets 16 where the fingers 29 overlap whereafter it is released at the points 35 where the gathering chains 29 diverge. Thus as can be seen in Figure 2, the crop material is released after a distance of finger overlap that is short. As the linear speed of the infeed reaches 31, 32 of the gathering chain exceeds the maximum ground speed of the harvester, and, if the crop is extending downwardly and forwardly, the rapid travel of the gathering chains will pull the crop to an erect position and then quickly release it. If the crop is erect, it stays that way since a release takes place so quickly after the gripping action occurs.

Generally, at the time the crop is held by the overlapping fingers 29 in the passage inlets 16, the cutter discs 42, 43 of the respective cutter means 41 operate to sever the crop from its stubble whereafter the butt ends of the stalks are lifted over the cutter discs 42, 43 and propelled rearwardly thereby and to the second (lower or rearward) crop conveyor means 51. The stalks with the foliage and ears thus are conveyed fully into the harvester.

Subsequently to the severing by the cutter means 41 the crop is smoothly taken over from the cutter discs 42, 43 by the second crop conveyor means 51. The crop conveying elements 61, 62, 63 have an aggressive grip on the butt ends of the stalks and propel these butt ends rearwardly and over the successive rotary members 52, 53, 54. As already explained, the particular timing of the several rotary members 52, 53, 54 together with the particular shapes of the various crop conveying elements 61, 62, 63 are effective to provide and aggressive transferring action on the one hand and yet to avoid material wrapping around the shafts of the rotary members on the other hand. The particular design of the crop conveying elements 63 on the rearmost rotary member 54 also avoids backfeeding for the reasons already explained.

It also should be remarked that, in comparison with conventional arrangements using lower (or rearward) conveyor chains, the second crop conveyor means according to the invention guarantee a much more positive feeding under the bad operating conditions mentioned in the introduction of this specification even though the crop conveying elements 61, 62, 63 act literally on the butt ends of the stalks, while that the prior art conveyor fingers grab the stalks slightly above these butt ends. The reason therefore is that, unlike in the prior art arrangements, the arrangement according to the invention does not comprise any trough shaped stalkway which can be filled up with debris and mud. Instead, the bottom of each stalkway, in effect, is formed by a movable floor which is self-cleaning. This basically contrasts with the fixed floor of the prior art stalkways which is subject to the dirt and mud build-up already mentioned. Mud and dirt that otherwise tends to build up on the bottom wall of the various stalkways of conventional row crop attachments, is now removed either rearwardly together with the crop stalks or downwardly through the movable floor.

The second (rearward or lower) crop conveyor means 51 become operative generally after the first (forward or upper) crop conveyor means 21 have released the crop at the release points 35 in the respective row units 17. Thus, as the butt ends of the stalks are being propelled rearwardly by the second crop conveyor means 51, the upper ends thereof more-or-less are held in the space immediately rearwardly of the respective release points 35. In other words, the second crop conveyor means 51 pivot the crop stalks about the release points 35 so that the butt ends of the stalks are swung upwardly and rearwardly toward and into the auger B. This insures that the crop will be fed butt ends first into the auger 8 and subsequently into the feedrolls and the cutterhead of the base unit. This is essential to insure a smooth and continuous feeding and hence a regular operation of the harvester.

It will be clear from what precedes that the row crop gathering attachment according to the invention accomplishes the objective set forward in the introduction of the specification. More particularly a row crop gathering attachment for a forage harvester is provided which is more efficient in operation under adverse operating conditions and which is less subject to wear, whereby an increased lifetime is obtained and whereby various components have to be replaced less frequently.

It further also will be apparent to those skilled in the art that various changes may be made in form, construction and arrangement of the row crop gathering attachment without departing from the scope of the invention as defined in the claims or sacrificing all of its material advantages, the form hereinbefore described being merely a preferred or exemplary embodiment thereof.

For example, it will be clear that row crop attachments with fewer numbers of row units (one, two or three row units) will not have the auger 8 shown in the drawings. In these attachments, the lower crop conveyor means 51 will propel the butt ends of the stalks directly into the base unit feed rolls.

Also, the forward (first or upper) crop conveyor means may be of a different type than the chain conveyors 22, 23 shown and described in the present application.

Further, while that the preferred embodiment comprises three parallel rotary members 52, 53, 54 together constituting the second crop conveyor means 51, either more or fewer such rotary members may be provided. It is even possible to provide only a single rotary member with a plurality of crop conveying elements extending therefrom.

Also, the crop conveying elements 61, 62, 63 of the rotary members 52, 53, 54 in the form of toothed discs may be different from those described herebefore. As an example, the angles of inclination 82, 83, 84 may be varied and even, the rearward rotary member 54 may have crop conveying elements which are fully circular in shape. Also the specific dimensions of the crop conveying elements 61, 62, 63 as given in the specification are exemplary only.

**Claims**

1. A row crop gathering attachment (1) for a forage harvester comprising at least one elongated stalkway (15) delimited, on the one hand, at transversely opposite sides thereof by generally upright and generally fore-and-aft extending wall portions of a pair of crop dividers (14) and, on the other hand, at a rearward and lower side thereof by floor means (51) extending transversely between said opposite wall members and across the width of said stalkway (15); each said stalkway (15) further also having associated therewith:
— first crop conveyor means (21) extending transversely into said stalkway (15) at positions generally above the level of the floor means (51); said first conveyor means (21), in use, moving backwards for gathering standing crop and for conveying the same in a rearward direction through the stalkway (15) as the forage harvester travels forwardly; and
— cutting means (41) provided at a level below the first crop conveyor means (21) on the one hand and forwardly of and generally in alignment with the floor means (51) on the other hand; said cutting means (41) being operable to sever crop from the stubble after being engaged by the first crop conveyor means (21); and
characterized in that:
the floor means are formed by second crop conveyor means (51) including at least one rotary member (52) in the form of shaft means (56) on which are mounted a plurality of crop conveying elements (61) extending therefrom and relatively closely spaced axially thereof; said shaft means (56) extending generally horizontally transversely across the width of the stalkway (15) and the or each rotary member (52), in use, being rotated so as to constitute, in effect, a moving floor operable to engage the butt ends of the crop severed by the cutting means (41) and to transfer the same thereover and longitudinally of the stalkway (15).

2. A row crop gathering attachment according to claim 1, characterized in that:
the second crop conveyor means (51) of the or each stalkway (15) comprise a plurality of rotary members (52, 53, 54), each in the form of shaft means (56, 57, 58) on which are mounted a plurality of crop conveying elements (61, 62, 63) extending therefrom and relatively closely spaced axially thereof;
said shaft means (56, 57, 58) extending transversely across the width of said stalkway (15) and being positioned the one generally behind the other as seen in the longitudinal direction of said stalkway (15) and being spaced relative to each other so that the crop conveying elements (61, 62, 63) of adjacent rotary members (52, 53, 54) interleave; and
said rotary members (52, 53, 54), in use, being rotated in the same direction so that they, in effect, constitute said moving floor.

3. A row crop gathering attachment according to claim 1 or 2, characterized in that the crop conveying elements (61, 62, 63) extending from the shaft means (56, 57, 58) of the at least one rotary member, respectively the rotary members (52, 53, 54), are in the form of toothed discs mounted perpendicularly to the respective shaft means (56, 57, 58).

4. A row crop gathering attachment according to claim 3, when appended to claim 2, characterized in that the rotary members (52, 53, 54) are driven in timed relationship so that the crop conveying elements (62, 63) of any one rotary member (53, 54) have a combing effect on the crop conveying elements (61, 62) of the next preceding rotary member (52, 53) for ensuring a smooth and positive transfer of the crop material from one rotary member to the next rotary member.

5. A row crop gathering attachment according to claim 4, characterized in that the toothed discs have operative edges (75, 76, 77) which, as seen in the direction of rotation of the rotary members (52, 53, 54), lead with respect to the straight lines drawn between the centers of the discs and the outer ends of the teeth; the operative edges (75, 76, 77) defining angles of inclination (82, 83, 84) with said straight lines, and the angle of inclination (83, 84) of the operative edge (76, 77) of a crop conveying element (62, 63) of one rotary member (53, 54) being larger than the angle of inclination (82, 83) of the operative edge (75, 76) of a crop conveying element (61, 62) of another rotary member (52, 53) positioned forwardly of said one rotary member (53, 54).

6. A row crop gathering attachment according to claim 5, characterized in that the second crop conveyor means (51) of the or each stalkway (15) comprise three rotary members (52, 53, 54) and in that the angles of inclination (82, 83, 84) of the operative edges (75, 76, 77) of the crop conveying elements (61, 62, 63) of the forward, middle and rearward rotary members (52, 53, 54) are in the range of 15°, 30°, and 45° respectively.

7. A row crop gathering attachment according to any of the claims 3 to 6, characterized in that the toothed discs have a thickness in the range of 1-2 mm, a diameter in the range of 15 cm and are spaced axially apart over a distance in the range of 1-2 cm.

8. A row crop gathering attachment according to any of the preceding claims characterized in that the moving floor, in effect, formed by the at least one rotary member, respectively the rotary members (52, 53, 54) is disposed with its operative surface in crop receiving relationship to the cutter means (41) and said operative surface extends upwardly and rearwardly from said cutter means (41) and relative to the direction of operative travel of the harvester.

9. A row crop gathering attachment according to claim 8, when appended to claim 5, characterized in that the operative edges (75) of the crop conveying elements (61) of the rotary member (52) adjacent the cutter means (41) generally are aligned with the cutter means (41) at the moment said edges (75) take over the crop material from the cutter means (41).

10. A row crop gathering attachment according to any of the preceding claims characterized in that all movable functional components (41, 51) in the lower portion of the or each stalkway (15) are of the rotary type and have bearing means (100, 101) which are positioned fully outside said stalkway (15) and within the sheet metal structures of the crop dividers (14) defining said stalkway (15) therebetween.

11. A row crop gathering attachment according to any of the preceding claims characterized in that the or each stalkway (15) is exempt of any stationary floor components.

12. A row crop gathering attachment according to any of the preceding claims, characterized in that, as seen in a direction perpendicular to the plane defined by the first crop conveyor means (21), the second crop conveyor means (51), in essence, are provided rearwardly of said first crop conveyor means (21).

13. A row crop gathering attachment according to any of the preceding claims characterized in that the first crop conveyor means (21) associated with the or each stalkway (15) comprise a pair of gathering chains (22, 23); one chain (22) being operative in one crop divider (14) and the other chain (23) being operative in the other crop divider (14) of the pair of crop dividers (14) defining said stalkway (15) therebetween.

14. A row crop gathering attachment according to claim 13 characterized in that the second crop conveyor means (51) are rotated at a circumferential speed which exceeds the linear speed of the first crop conveyor means (21).

**Patentansprüche**

1. Reihenpflanzensammelgerät (1) für einen Feldhäcksler mit zumindest einem langgestreckten Stengelkanal (15), der einerseits an seinen in Querrichtung gegenüberliegenden Seiten durch allgemein aufrechtstehende und sich allgemein in Längsrichtung erstreckende Wandteile eines Paares von Erntematerial-Teilern (14) und andererseits an einer hinteren und unteren Seite hiervon durch Bodenteile (51) begrenzt ist, die sich in Querrichtung zwischen den gegenüberliegenden Wandteilen und über die Breite des Stengelkanals (15) erstrecken, wobei jedem Stengelkanal (15) weiterhin folgende Teile zugeordnet sind:

— erste Erntematerial-Fördereinrichtungen (21), die sich in Querrichtung in den Stengelkanal (15) an Positionen erstrecken, die allgemein oberhalb der Ebene der Bodenteile (51) liegen, wobei sich die ersten Fördereinrichtungen (21) im Betrieb nach hinten bewegen, um aufrechtstehendes Erntematerial aufzusammeln und es in einer Rückwärtsrichtung durch den Stengelkanal (15) zu fördern, während sich der Feldhäcksler in Vorwärtsrichtung bewegt und

— Schneideinrichtungen (41), die in einer Höhenlage unterhalb der ersten Erntematerial-Fördereinrichtungen (21) einerseits und vor und allgemein in Ausrichtung mit den Bodenteilen (51) angeordnet sind, wobei die Schneideinrichtungen (41) Erntematerial von der Stoppel abschneiden, nachdem das Erntematerial mit den ersten Erntematerial-Fördereinrichtungen (21) in Eingriff gekommen ist, dadurch gekennzeichnet, daß die Bodenteile durch zweite Erntematerial-Fördereinrichtungen (51) gebildet sind, die zumindest ein rotierendes Element (52) in Form von Wellenteilen (56) einschließen, auf denen eine Vielzahl von Erntematerial-Förderelementen (61) befestigt sind, die sich von den Wellenteilen erstrecken und mit relativ geringem Axialabstand angeordnet sind, daß die Wellenteile (56) sich allgemein in Horizontalrichtung quer über die Breite des Stengelkanals (15) erstrecken, und daß das oder jedes rotierende Element (52) im Betrieb so gedreht wird, daß es im Ergebnis einen sich bewegenden Boden bildet, der so betätigbar ist, daß er mit den geschnittenen Enden des von den Schneideinrichtungen (41) abgeschnittenen Erntematerials in Eingriff kommt und das Erntematerial über sich hinweg und in Längsrichtung des Stengelkanals (15) überführt.

2. Reihenpflanzensammelgerät nach Anspruch 1, dadurch gekennzeichnet, daß die zweiten Erntematerial Fördereinrichtungen (51) des oder jedes Stengelkanals (15) eine Mehrzahl von rotierenden Elementen (52, 53, 54) jeweils in Form von Wellenteilen (56, 57, 58) umfassen, auf denen eine Vielzahl von Erntematerial-Förderelementen (61, 62, 63) befestigt sind, die sich von den Wellenteilen erstrecken und mit relativ geringem Axialabstand auf diesen angeordnet sind, daß die Wellenteile (56, 57, 58) sich in Querrichtung über die Breite des Stengelkanals (15) erstrecken und allgemein einer hinter dem anderen bei Betrachtung in Längsrichtung des Stengelkanals (15) mit einem derartigen Abstand relativ zueinander derart angeordnet sind, daß die Erntematerial-Förderelemente (61, 62, 63) von benachbarten rotierenden Elementen (52, 53, 54) ineinander verschachtelt sind, und daß die rotierenden Elemente (52, 53, 54) im Betrieb in der gleichen Richtung gedreht werden, sodaß sie im Ergebnis den sich bewegenden Boden bilden.

3. Reihenpflanzensammelgerät nach Ansprauch 1 oder 2, dadurch gekennzeichnet, daß die Erntematerial-Förderelemente (61, 62, 63), die sich von den Wellenteilen (56, 57, 58) des zumindest einen rotierenden Elementes bzw. der rotierenden Elemente (52, 53, 54) erstrecken, die Form von gezahnten Scheiben aufweisen, die senkrecht zu den jeweiligen Wellenteilen (56, 57, 58) befestigt sind.

4. Reihenpflanzensammelgerät nach Anspruch 3 unter Rückbeziehung auf Anspruch 2, dadurch gekennzeichnet, daß die rotierenden Elemente (52, 53, 54) in zeitlich gesteuerter Beziehung derart angetrieben sind, daß die Erntematerial-Förderelemente (62, 63) irgendeines rotierenden Elementes (53, 54,) eine Kämmwirkung auf die Erntematerial-Förderelemente (61, 62) des nächstvorhergehenden rotierenden Elementes (52, 53) haben, um eine gleichförmige und zwangsweise Überführung des Erntematerials von einem rotierenden Element zum nächsten rotierenden Element sicherzustellen.

5. Reihenpflanzensammelgerät nach Anspruch 4, dadurch gekennzeichnet, daß die gezahnten Scheiben Arbeitskanten (75, 76, 77) aufweisen, die bei Betrachtung in der Drehrichtung der rotierenden Elemente (52, 53, 54) gegenüber geraden Linien voreilen, die zwischen den Mittelpunkten der Scheiben und den äußeren Enden der Zähne gezogen sind, daß die Arbeitskanten (75, 76, 77) Neigungswinkel (82, 83, 84) mit den geraden Linien bilden, und daß der Neigungswinkel (83, 84) der Arbeitskante (76, 77) eines Erntematerial-Förderelementes (62, 63) eines rotierenden Elementes (53, 54) größer als der Neigungswinkel (82, 83) der Arbeitskante (75, 76) eines Erntematerial-Förderelementes (61, 62) eines weiteren rotierenden Elementes (52, 53) ist, das in Vorwärtsrichtung vor dem einen rotierenden Element (53, 54) angeordnet ist.

6. Reihenpflanzensammelgerät nach Anspruch 5, dadurch gekennzeichnet, daß die zweiten Erntematerial Fördereinrichtungen des oder jedes Stengelkanals (15) drei rotierende Elemente (52, 53, 54) umfassen, und daß die Neigungswinkel (82, 83, 84) der Arbeitskanten (75, 76, 77) der Erntematerial-Förderelemente (61, 62, 63) der vorderen, mittleren, und hinteren rotierenden Elemente (52, 53, 54) im Bereich von 15 Grad, 30 Grad bzw. 45 Grad liegen.

7. Reihenpflanzensammelgerät nach einem der Ansprüche 3 6, dadurch gekennzeichnet, daß die gezahnten Scheiben eine Dicke im Bereich von 1 - 2 mm, einen Durchmesser im Bereich von 15 cm und einen axialen Abstand im Bereich von 1 - 2 cm aufweisen.

8. Reihenpflanzensammelgerät nach einem der vorhergehenden Ansprüche, dadurch gekennzeichnet, daß der sich bewegende Boden, der im Ergebnis durch das zumindestens eine rotierende Element bzw. die rotierenden Elemente (52, 53, 54) gebildet ist, mit seiner Arbeitsfläche in Erntematerial-Aufnahmebeziehung zu den Schneideinrichtungen (41) angeordnet ist und daß sich die Arbeitsfläche von den Schneideinrichtungen (41) und bezüglich der Betriebsbewegung des Feldhäckslers nach oben und nach hinten erstreckt.

9. Reihenpflanzensammelgerät nach Anspruch 8 unter Rückbeziehung auf Anspruch 5, dadurch gekennzeichnet, daß die Arbeitskanten (75) der Erntematerial-Förderelemente (61) des rotierenden Elementes (52) benachbart zu den Schneideinrichtungen (41) allgemein mit den Schneideinrichtungen (41) zu dem Zeitpunkt ausgerichtet sind, zu dem die Arbeitskanten (75) das Erntematerial von den Schneideinrichtungen (41) übernehmen.

10. Reihenpflanzensammelgerät nach einem der vorhergehenden Ansprüche, dadurch gekennzeichnet, daß alle beweglichen Funktionsbauteile (41, 51) in dem unteren Teil des oder jedes Stengelkanals (15) vom rotierenden Typ sind und Lagerelemente (100, 101) aufweisen, die vollständig außerhalb des Stengelkanals (15) und innerhalb der Metallblechstrukturen der Erntematerial-Teiler (14) angeordnet sind, die zwischen sich den Stengelkanal (15) umgrenzen.

11. Reihenpflanzensammelgerät nach einem der vorhergehenden Ansprüche, dadurch gekennzeichnet, daß der oder jeder Stengelkanal (15) frei von irgendwelchen stationären Bodenbauteilen ist.

12. Reihenpflanzensammelgerät nach einem der vorhergehenden Änsprüche, dadurch gekennzeichnet, daß bei Betrachtung in einer Richtung senkrecht zu der durch die ersten Erntematerial-Fördereinrichtungen (21) gebildeten Ebene die zweiten Erntematerial-Fördereinrichtungen (51) im wesentlichen hinter den ersten Erntematerial-Fördereinrichtungen (21) angeordnet sind.

13. Reihenpflanzensammelgerät nach einem der vorhergehenden Änsprüche, dadurch gekennzeichnet, daß die dem oder jedem Stengelkanal (15) zugeordneten ersten Erntematerial-Fördereinrichtungen (21) zwei Einzugsketten (22, 23) umfassen, daß eine Kette (22) in einem Erntematerial-Teiler (14) betrieben wird, während die andere Kette (23) in dem anderen Erntematerial-Teiler (14) des Paares von Erntematerial-Teilern (14) betrieben wird, die zwischen sich den Stengelkanal (15) umgrenzen.

14. Reihenpflanzensammelgerät nach Anspruch 13, dadurch gekennzeichnet, daß die zweiten Erntematerial-Fördereinrichtungen (51) mit einer Umfangsgeschwindigkeit in Drehung versetzt sind, die die geradlinige Geschwindigkeit der ersten Erntematerial-Fördereinrichtungen (21) übersteigt.

**Revendications**

1. Dispositif collecteur de récolte en lignes (1) pour une récolteuse-hacheuse de fourrage, comportant au moins un passage pour tiges allongé (15) délimité, d'une part, au niveau de ses côtés opposés transversalement, par des parties de parois de deux diviseurs de récolte (14), sensiblement verticales et qui s'étendent dans l'ensemble longitudinalement et, d'autre part, au niveau de leur côté arrière et inférieur, par des moyens formant fond (51) qui s'étendent transversalement entre lesdits éléments de parois opposés et sur toute la largeur dudit passage pour tiges (15), chacun desdits passages pour tiges (15) possédant également associé à lui:

— des premiers moyens transporteurs de récolte (21) qui s'étendent transversalement jusque dans ledit passage pour tiges (15) en des points positionnés sensiblement au-dessus du niveau des moyens formant fond (51); lesdits premiers moyens transporteurs (21) se déplaçant vers l'arrière, en service, pour collecter une récolte sur pied et pour acheminer celle-ci dans une direction orientée vers l'arrière à travers le passage pour tiges (15), au fur et à mesure que la récolteuse-hacheuse de fourrage progresse vers l'avant; et

— des moyens de coupe (41) prévus, d'une part, à un niveau situé au-dessous des premiers moyens transporteurs de récolte (21) et, d'autre part, en avant des moyens formant fond (51) et sensiblement en alignement avec ceux-ci; lesdits moyens de coupe (41) étant aptes à opérer pour séparer la récolte du chaume, une fois celle-ci attaquée par les premiers moyens transporteurs de récolte (21); et

caractérisé en ce que:

les moyens formant fond sont constitués par des seconds moyens transporteurs de récolte (51) comportant au moins un organe rotatif (52) sous la forme d'un moyen formant arbre (56) sur lequel sont montés plusieurs éléments transporteurs de récolte (61) qui s'étendent depuis celui-ci et sont espacés axialement d'une distance relativement faible par rapport à ce dernier; ledit moyen formant arbre (56) s'étendant, sensiblement à l'horizontale, transversalement sur toute la largeur du passage pour tiges (15), tandis qu'en service, le ou les organe(s) rotatif(s) (52) est (sont) animé(s) d'un mouvement de rotation de façon à définir, en fait, un fond mouvant apte à opérer pour attaquer les gros bouts de la récolte séparée par les moyens de coupe (41) et pour les transférer audelà de ceux-ci et dans le sens de la longueur du passage pour tiges (15).

2. Dispositif collecteur de récolte en lignes selon la revendication 1, caractérisé en ce que:

les seconds moyens transporteurs de récolte (51) du ou des passage(s) pour tiges (15) comportent plusieurs organes rotatifs (52, 53, 54) respectivement sous la forme de moyens formant arbres (56, 57, 58) sur lesquels sont montés plusieurs éléments transporteurs de récolte (61, 62, 63) qui s'étendent depuis ceux-ci et sont espacés axialement d'une distance relativement faible par rapport à ces derniers;

lesdits moyens formant arbres (56, 57, 58) s'étendant transversalement sur toute la largeur dudit passage pour tiges (15) et étant disposés, d'une manière générale, les uns derrière les autres, lorsqu'on les considère dans le sens longitudinal dudit passage pour tiges (15), tout en étant espacés les uns des autres d'une distance telle que les éléments transporteurs de récolte (61, 62, 63) d'organes rotatifs adjacents (52, 53, 54) s'enchevêtrent; et

lesdits organes rotatifs (52, 53, 54) étant, en service, animés d'un mouvement de rotation dans le même sens de façon à définir, en fait, ledit fond mouvant.

3. Dispositif collecteur de récolte en lignes selon la revendication 1 ou 2, caractérisé en ce que les éléments transporteurs de récolte (61, 62, 63) qui s'étendent depuis les moyens formant arbres (56, 57, 58) de l'organe rotatif, respectivement des organes rotatifs (52, 53, 54), se présentent sous la forme de disques dentés montés perpendiculairement aux moyens formant arbres (56, 57, 58) respectifs.

4. Dispositif collecteur de récolte en lignes selon la revendication 3, lorsqu'elle est rattachée à la revendication 2, caractérisé en ce que les organes rotatifs (52, 53, 54) sont entraînés dans une relation synchronisée de façon que les éléments transporteurs de récolte (62, 63) de l'un quelconque des organes rotatifs (53, 54) exercent une action de peignage sur les éléments transporteurs de récolte (61, 62) de l'organe rotatif (52, 53) voisin précédent, en vue d'assurer un transfert régulier et efficace des produits de récolte d'un organe rotatif à l'organe rotatif suivant.

5. Dispositif collecteur de récolte en lignes selon la revendication 4, caractérisé en ce que les disques dentés présentent des arêtes actives (75, 76, 77) qui, considérées dans le sens de rotation des organes rotatifs (52, 53, 54), sont situées en avant par rapport aux lignes droites tracées entre les centres des disques et les extrémités extérieures des dents; les arêtes actives (75, 76, 77) définissant des angles d'inclinaison (82, 83, 84) avec lesdites lignes droites, et l'angle d'inclinaison (83, 84) de l'arête active (76, 77) d'un élément transporteur de récolte (62, 63) d'un organe rotatif (53, 54) étant supérieur à l'angle d'inclinaison (82, 83) de l'arête active (75, 76) d'un élément transporteur de récolte (61, 62) d'un autre organe rotatif (52, 53) positionné en avant dudit organe rotatif (53, 54).

6. Dispositif collecteur de récolte en lignes selon la revendication 5, caractérisé en ce que les seconds moyens transporteurs de récolte (51) du ou des passage(s) pour tiges (15) comprennent trois organes rotatifs (52, 53, 54) et en ce que les angles d'inclinaison (82, 83, 84) des arêtes actives (75, 76, 77) des éléments transporteurs de récolte (61, 62, 63) des organes rotatifs avant, médian et arrière (52, 53, 54) se situent respectivement dans la plage de 15', 30', et 45'.

7. Dispositif collecteur de récolte en lignes selon l'une quelconque des revendications 3 à 6, caractérisé en ce que les disques dentés ont une épaisseur comprise dans la plage de 1-2 mm, un diamètre qui se situe dans la plage de 15 cm et sont espacés axialement les uns des autres d'une distance comprise dans la plage de 1-2 cm.

8. Dispositif collecteur de récolte en lignes selon l'une quelconque des revendications précédentes, caractérisé en ce que le fond mouvant qui est, en fait, défini par au moins un organe rotatif, respectivement les organes rotatifs (52, 53, 54), est disposé de telle façon que sa surface active se trouve en relation de réception de récolte vis-à-vis des moyens de coupe (41), ladite surface active s'étendant vers le haut et vers l'arrière depuis lesdits moyens de coupe (41) et par rapport au sens d'avancement fonctionnel de la récolteuse-hacheuse.

9. Dispositif collecteur de récolte en lignes selon la revendication 8, lorsqu'elle est rattachée à la revendication 5, caractérisé en ce qu'au moment où elles reprennent les produits de récolte provenant des moyens de coupe (41), lesdites arêtes actives (75) des éléments transporteurs de récolte (61) de l'organe rotatif (52) situé à proximité des moyens de coupe (41) sont, dans l'ensemble, alignées avec les moyens de coupe (41).

10. Dispositif collecteur de récolte en lignes selon l'une quelconque des revendications précédentes, caractérisé en ce que tous les organes fonctionnels mobiles (41, 51) situés dans la partie inférieure du ou des passage(s) pour tiges (15) sont du type rotatif et possèdent des moyens formant paliers (100, 101) positionnés entièrement à l'extérieur dudit passage pour tiges (15) et à l'intérieur des structures en tôle métallique des diviseurs de récolte (14) qui définissent entre eux ledit passage pour tiges (15).

11. Dispositif collecteur de récolte en lignes selon l'une quelconque des revendications précédentes, caractérisé en ce que le ou les passage(s) pour tiges (15) est (sont) dépourvu(s) de tout organe formant fond fixe.

12. Dispositif collecteur de récolte en lignes selon l'une quelconque des revendications précédentes, caractérisé en ce que, considérés dans une direction perpendiculaire au plan défini par les premiers moyens transporteurs de récolte (21), les seconds moyens transporteurs de récolte (51) sont essentiellement prévus en arrière desdits premiers moyens transporteurs de récolte (21).

13. Dispositif collecteur de récolte en lignes selon l'une quelconque des revendications précédentes, caractérisé en ce que les premiers moyens transporteurs de récolte (21) associés au(x) passage(s) pour tiges (15) comportent deux chaînes collectrices (22, 23); l'une (22) étant active dans l'un des diviseurs de récolte (14), tandis que l'autre (23) est active dans le second diviseur de récolte (14) de la paire de diviseurs de récolte (14) qui définissent entre eux ledit passage pour tiges (15).

14. Dispositif collecteur de récolte en lignes selon la revendication 13, caractérisé en ce que les seconds moyens transporteurs de récolte (51) sont animés d'un mouvement de rotation à une vitesse circonférentielle supérieure à la vitesse linéaire des premiers moyens transporteurs de récolte (21).

FIG.1

FIG.2

2

FIG.3

FIG.4

FIG.5